# EUROPEAN PATENT APPLICATION

(11) **EP 4 825 523 A1**
(43) Date of publication of application: **21.10.2026**
(21) Application number: 24903948.8
(22) Date of filing: 24.10.2024
(51) Int. Cl.: B23K 35/30, B23K 9/18

(54) **WELDING MATERIAL FOR SUBMERGED ARC WELDING**

(30) Priority: 15.12.2023 KR 20230183797
(71) Applicant: POSCO Co., Ltd, Gyeongsangbuk-do 37859 (KR)
(72) Inventor: LEE, Sang-Chul, Pohang-si, Gyeongsangbuk-do 37877 (KR); LEE, Hong-Kil, Pohang-si, Gyeongsangbuk-do 37877 (KR)
(74) Representative: Meissner Bolte Partnerschaft mbB
(86) International application number: PCT/KR2024/016257
(87) International publication number: WO 2025/127381

(57) **Abstract**

The purpose of one aspect of the present invention is to provide a welding material for submerged arc welding. A preferred aspect of the present invention provides a welding material for submerged arc welding, the material being capable of providing a welding joint portion with high strength as well as excellent hydrogen embrittlement resistance and stress corrosion resistance.

## Description

### Technical Field

The present disclosure relates to a welding material for submerged arc welding.

### Background Art

Austenitic high-strength steel sheets or strips have excellent hydrogen embrittlement resistance and stress corrosion cracking resistance due to high hydrogen solubility and a low hydrogen diffusion rate. In addition, austenitic high-strength steel plates or strips have excellent non-magnetic properties due to an austenitic structure thereof, making the same suitable for use in power generation equipment and parts requiring stealth functions.

However, conventional materials having an austenitic microstructure have limitations in terms of strength improvement, which limits the application thereof, or reduces the competitiveness thereof. In particular, since the conventional materials have non-magnetic properties, the stealth performance is superior to that of conventional carbon steel, but the application is limited due to the relatively low strength thereof.

Therefore, there is a need to develop a welding material for submerged arc welding that can be applied to steel sheets and strips having both an austenitic microstructure and high strength.

### Summary of Invention

### Technical Problem

An aspect of the present disclosure is to provide a welding material for submerged arc welding.

A preferred aspect of the present disclosure is to provide a welding material for submerged arc welding that can impart high strength along with excellent hydrogen embrittlement resistance and stress corrosion resistance to a welding joint portion.

### Solution to Problem

According to an aspect of the present disclosure, provided is a welding material for submerged arc welding, the welding material including by weight%: 0.150 to 0.60% of C, 0.10 to 1.0% of Si, 15.0 to 25.0% of Mn, 1.0 to 5.0% of Cr, 0.050 to 3.0% of Mo, 0.050 to 4.0% of V, 5.0% or less (including 0%) of Ni, 0.020% or less (excluding 0%) of P, 0.0070% or less (excluding 0%) of S, 0.15% or less (including 0%) of N, 0.10 to 1.0% of CaF2, with a remainder of Fe and other inevitable impurities.

The welding material may have a microstructure comprised of austenite.

### Advantageous Effects of Invention

According to an aspect of the present disclosure, a welding material for submerged arc welding may be provided.

According to a preferred aspect of the present disclosure, a welding material for submerged arc welding that can impart high strength along with excellent hydrogen embrittlement resistance and stress corrosion resistance to a welding joint portion may be provided.

### Brief description of drawings

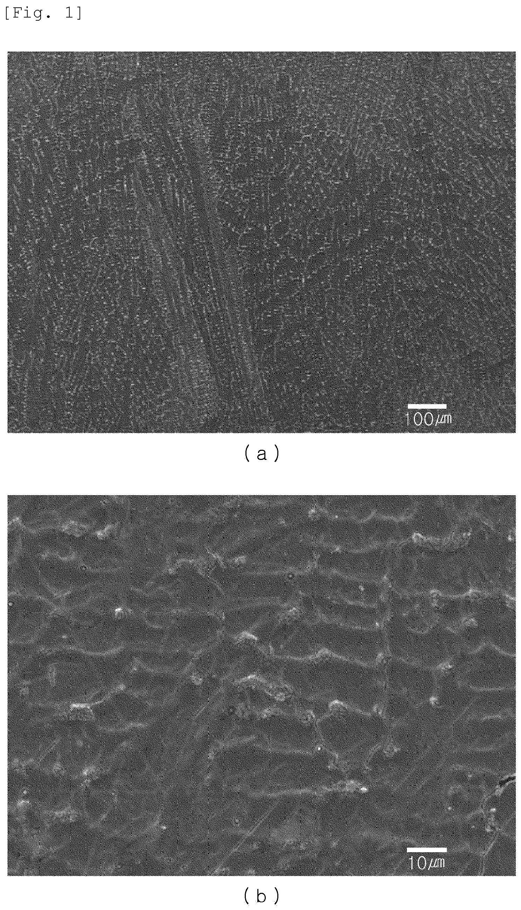

FIG. 1 is a photograph of Invention Example 1 observed with a scanning electron microscope, (a) is a photograph observed at 100x magnification, and (b) is a photograph observed at 1000x magnification.

### Best Mode for Invention

The present inventors have confirmed that austenitic stability may be secured by using manganese and carbon instead of expensive nickel among alloying components of a welding material for submerged arc welding for austenitic high-strength steel, and strength may be improved by additionally including alloying elements, thereby completing the present disclosure.

Hereinafter, a welding material for submerged arc welding according to an embodiment of the present disclosure will be described. First, an alloy composition will be described. The content of the alloy composition described below refers to % by weight.

### Carbon (C): 0.150 to 0.60%

Carbon (C) is an essential element that should be included as an economical element for effectively securing the strength of a welding joint portion, and stabilizing an austenitic microstructure. When the content of C is less than 0.150%, it may be difficult to sufficiently achieve the effect for securing austenitic stability and improving the strength described above. When the content of C exceeds 0.60%, it may cause weld cracks. Therefore, the content of C is preferably in a range of 0.150 to 0.60%. A lower limit of the content of C is more preferably 0.20%, even more preferably 0.250%, and most preferably 0.30%. An upper limit of the content of C is more preferably 0.550%, even more preferably 0.50%, and most preferably 0.450%.

### Silicon (Si): 0.10 to 1.0%

Silicon (Si) is an element improving strength through solid solution strengthening. In addition, Si has the effect of improving the fluidity of molten metal, thereby reducing welding defects. When the content of Si is less than 0.10%, it may be difficult to sufficiently obtain the above-described effect. When the content of Si exceeds 1.0%, it may reduce formability at high and low temperatures, and deteriorate austenitic stability. Therefore, the content of Si is preferably in a range of 0.10 to 1.0%. A lower limit of the content of Si is more preferably 0.150%, even more preferably 0.20%, and most preferably 0.250%. An upper limit of the content of Si is more preferably 0.950%, even more preferably 0.90%, and most preferably 0.850%.

### Manganese (Mn): 15.0 to 25.0%

Manganese (Mn) is a strong austenite-stabilizing element, which helps maintain non-magnetic properties. In addition, Mn serves to improve strength and impact toughness while increasing a work hardening rate. In addition, Mn has the effect of removing S, an impurity through the formation of MnS. When the content of Mn is less than 15.0%, it may be difficult to sufficiently obtain the above-described effect.
When the content of Mn exceeds 25.0%, there may be disadvantages such as increased difficulty in the manufacturing process, increased manufacturing costs, and deterioration in corrosion resistance. Therefore, the content of Mn is preferably in a range of 15.0 to 25.0%. A lower limit of the content of Mn is more preferably 16.0%, even more preferably 17.0%, and most preferably 18.0%. An upper limit of the content of Mn is more preferably 24.0%, even more preferably 23.0%, and most preferably 22.0%.

### Chromium (Cr): 1.0 to 5.0%

Chromium (Cr) acts as a key component in the formation of carbides such as MC, M₂₃C₆, or the like, and such fine carbides improve strength through precipitation strengthening. As an antioxidant, Cr has the advantage of increasing oxidation resistance in response to external oxidizing environments. When the content of Cr is less than 1.0%, it may be difficult to sufficiently obtain the above-described effect. When the content of Cr exceeds 5.0%, austenitic stability may be reduced, and precipitates may be excessively formed, thereby deteriorating impact toughness. Therefore, the content of Cr is preferably in a range of 1.0 to 5.0%. A lower limit of the content of Cr is more preferably 1.50%, even more preferably 2.0%, and most preferably 2.50%. An upper limit of the content of Cr is more preferably 4.50%, even more preferably 4.0%, and most preferably 3.50%.

### Molybdenum (Mo): 0.050 to 3.0%

Molybdenum (Mo) has the effect of improving strength through a solid-solution strengthening effect. In addition, Mo suppresses the formation and coarsening of precipitates in a matrix structure, thereby preventing the deterioration in impact toughness due to excessive precipitation of carbides. When the content of Mo is less than 0.050%, it may be difficult to sufficiently obtain the above-described effect. When the content of Mo exceeds 3.0%, it may not only reduce economic feasibility since Mo is an expensive element, but also deteriorate toughness. Therefore, the content of Mo is preferably in a range of 0.050 to 3.0%. A lower limit of the content of Mo is more preferably 0.10%, even more preferably 0.20%, and most preferably 0.30%. The content of Mo is more preferably 2.50% or less, even more preferably 2.0% or less, and most preferably 1.50% or less.

### Vanadium (V): 0.050 to 4.0%

Vanadium (V) serves to improve strength through precipitation of fine carbides. When the content of V is less than 0.050%, it may be difficult to sufficiently obtain the above-described effect. When the content of V exceeds 4.0%, it may cause precipitation of coarse carbides, which may result in deterioration in impact toughness. Therefore, the content of V is preferably in a range of 0.050 to 4.0%. A lower limit of the content of V is more preferably 0.10%, even more preferably 0.30%, and most preferably 0.50%. An upper limit of the content of V is more preferably 3.50%, even more preferably 3.0%, and most preferably 2.50%.

### Nickel (Ni): 5.0% or less (including 0%)

Nickel (Ni) is a strong austenite-stabilizing element, which helps improve impact toughness. In addition, Ni helps improve corrosion resistance of a welding joint portion. When the content of Ni exceeds 5.0%, it may cause a decrease in strength due to a change in deformation behavior, and may also reduce economic feasibility. Therefore, the content of Ni is preferably in a range of 5.0% or less (including 0%). An upper limit of the content of Ni is more preferably 4.0%, even more preferably 3.0%, and most preferably 2.0%.

### Phosphorus (P): 0.020% or less (excluding 0%)

Phosphorus (P) is an impurity element, and when the content of P exceeds 0.020%, there may be a risk of embrittlement, and there may be a problem of rapid deterioration in impact toughness. Phosphorus (P) is theoretically preferable to be 0%, but since P is an element that is inevitably included in the manufacturing process, 0% is excluded. Therefore, the content of P is preferably in a range of 0.020% or less (excluding 0%). The content of P is more preferably 0.0150% or less, even more preferably 0.010% or less, and most preferably 0.0050% or less.

### Sulfur (S): 0.0070% or less (excluding 0%)

Sulfur (S) is an impurity element, and when the content of S exceeds 0.0070%, a low-melting-point compound such as iron sulfide (FeS) may be formed during welding, which may cause high-temperature cracks. Sulfur (S) is theoretically preferable to be 0%, but since S is an element that is inevitably included in the manufacturing process, 0% is excluded. Therefore, the content of S is preferably in a range of 0.0070% or less (excluding 0%). The content of S is more preferably 0.0060% or less, even more preferably 0.0050% or less, and most preferably 0.0040% or less.

### Nitrogen (N): 0.150% or less (including 0%)

Nitrogen (N) acts as a strong austenite-stabilizing element, which helps secure hydrogen embrittlement resistance and non-magnetic properties. When the content of N exceeds 0.150%, cracks may be caused during welding and nitrides may be formed, thereby deteriorating impact toughness. Therefore, the content of N is preferably in a range of 0.150% or less (including 0%). An upper limit of the content of N is more preferably 0.140%, even more preferably 0.130%, and most preferably 0.120%.

### Calcium fluoride (CaF2): 0.10 to 1.0%

Calcium fluoride (CaF2) acts as an arc stabilizer to improve welding workability. When the content of CaF2 is less than 0.10%, it may be difficult to sufficiently obtain the above-described effect. When the content of CaF2 exceeds 1.0%, there may be a risk of causing defects such as pores in a weld zone. Therefore, the content of CaF2 is preferably in a range of 0.10 to 1.0%. A lower limit of the content of CaF2 is more preferably 0.150%, even more preferably 0.20%, and most preferably 0.250%. An upper limit of the content of CaF2 is more preferably 0.950%, even more preferably 0.90%, and most preferably 0.850%.

The remaining component of the present disclosure is iron (Fe). However, since in the common manufacturing process, unintended impurities may be inevitably incorporated from raw materials or the surrounding environment, the component may not be excluded. Since these impurities are known to any person skilled in the common manufacturing process, the entire contents thereof are not particularly mentioned in the present specification.

A welding material for submerged arc welding of the present disclosure may have a microstructure comprised of austenite. Thereby, a welding joint portion manufactured using the welding material for submerged arc welding may also have an austenitic structure, and high strength and excellent hydrogen embrittlement resistance and stress corrosion resistance may be provided to the welding joint portion. For example, the welding joint portion may have yield strength of 500 to 650 MPa and impact toughness of 27 J or more at -196°C.

### Mode for Invention

Hereinafter, the present disclosure will be specifically described through the following Examples. However, it should be noted that the following examples are only for describing the present disclosure by illustration, and not intended to limit the right scope of the present disclosure. The reason is that the right scope of the present disclosure is determined by the matters described in the claims and reasonably inferred therefrom.

### (Example)

After a welding material for submerged arc welding having an alloy composition shown in Table 1 below was manufactured, a steel sheet having an austenitic structure was subjected to submerged arc welding using the welding material to obtain a welding joint portion. In this case, the steel sheet had an alloy composition including, by weight%: 0.05 to 0.6% of C, 0.2 to 2.0% of Si, 15 to 24% of Mn, 0.02% or less of S, 0.02% or less of P, with a remainder of Fe and other inevitable impurities. The submerged arc welding was performed with a maximum heat input of 4.8 kJ/mm. Yield strength, impact toughness, hydrogen embrittlement resistance, and stress corrosion resistance of the welding joint portion were evaluated, and the results are shown in Table 1 below. Meanwhile, microstructures of the welding joint portions according to Invention Examples 1 to 3 and Comparative Examples 1 to 5 were all comprised of austenite.

The yield strength was measured using the ASTM A370 standard.

The impact toughness was measured using the ASTM A20 standard.

The hydrogen embrittlement resistance was measured using the ASTM F519 standard and evaluated as good or bad.

The stress corrosion resistance was measured using the ASTM G36 standard, and when no cracks occurred, it was evaluated as good, and when cracks occurred, it was evaluated as poor.

**[Table 1]**

| Divis ion | Alloy composition(weight%) | | | | | | | | | | | Yiel d stre ngth (MPa ) | Impac t tough ness (J, @-196) | Hydro gen embri ttlem ent resis tance | Stres s corro sion resis tance |
|---|---|---|---|---|---|---|---|---|---|---|---|---|---|---|---|
| | C | Si | Mn | Cr | Mo | V | Ni | P | S | N | CaF2 | | | | |
| Inven tion Examp le 1 | 0.5 | 0.5 | 20 | 3.0 | 1.0 | 0.0 5 | 1.0 | 0.0 1 | 0.00 5 | 0 | 0.1 | 521 | 78 | Good | Good |
| Inven tion Examp le 2 | 0.6 | 0.5 | 20 | 3.0 | 1.0 | 4.0 | 1.0 | 0.0 1 | 0.00 5 | 0.1 | 0.7 | 574 | 70 | Good | Good |
| Inven tion Examp le 3 | 0.3 | 1.0 | 24 | 2.0 | 0.5 | 1.5 | 0.0 1 | 0.0 1 | 0.00 5 | 0.0 8 | 0.4 | 504 | 90 | Good | Good |
| Compa rativ e Examp le 1 | 0.4 | 0.3 | 20 | 3.0 | 0 | 0 | 0 | 0.0 1 | 0.00 5 | 0.0 5 | 0.5 | 390 | 71 | Good | Good |
| Compa rativ e Examp le 2 | 0.3 | 1.0 | 24 | 2.0 | 0 | 1.0 | 1.0 | 0.0 1 | 0.00 5 | 0 | 0.5 | 410 | 67 | Good | Good |
| Compa rativ e Examp le 3 | 0.3 | 1.0 | 24 | 2.0 | 0.5 | 0 | 1.0 | 0.0 1 | 0.00 5 | 0 | 0.5 | 394 | 85 | Good | Good |
| Compa rativ e Example 4 | 0.1 | 0.1 | 24 | 0 | 0 | 0 | 0 | 0.0 1 | 0.00 5 | 0 | 0.5 | 305 | 99 | Good | Good |
| Compa rativ e Examp le 5 | 0.1 | 0.1 | 24 | 4.0 | 1.0 | 3.0 | 0 | 0.0 1 | 0.00 5 | 0 | 0.5 | 425 | 105 | Good | Good |

As can be seen from Table 1 above, in the case of Invention Examples 1 to 3, it can be seen that high yield strength is secured along with good hydrogen embrittlement resistance and stress corrosion resistance. On the other hand, in the case of Comparative Examples 1 to 3, not satisfying the conditions of the present disclosure, it can be seen that the yield strength is low.

FIG. 1 is a photograph of Invention Example 1 observed with a scanning electron microscope, (a) is a photograph observed at 100x magnification, and (b) is a photograph observed at 1000x magnification. As can be seen in FIG. 1, it can be confirmed that Invention Example 1 has an austenitic structure.

## Claims

1. A welding material for submerged arc welding comprising, by weight%:
0.150 to 0.60% of C, 0.10 to 1.0% of Si, 15.0 to 25.0% of Mn, 1.0 to 5.0% of Cr, 0.050 to 3.0% of Mo, 0.050 to 4.0% of V, 5.0% or less (including 0%) of Ni, 0.020% or less (excluding 0%) of P, 0.0070% or less (excluding 0%) of S, 0.15% or less (including 0%) of N, 0.10 to 1.0% of CaF2, with a remainder of Fe and other inevitable impurities.

2. The welding material for submerged arc welding of claim 1, wherein the welding material has a microstructure comprised of austenite.
